# FASCICULE DE BREVET EUROPEEN

(11) **EP 1 758 771 B1**
(45) Date de publication et mention de la délivrance du brevet: **11.02.2009**
(21) Numéro de dépôt: 05760984.4
(22) Date de dépôt: 14.06.2005
(51) Int. Cl.: B60R 25/02

(54) **DISPOSITIF ANTIVOL DE DIRECTION A VERROU INSERABLE NOTAMMENT POUR VEHICULE AUTOMOBILE**
LENKRADSPERRE MIT EINFÜHRBAREM BOLZEN, IM BESONDEREN ZUR VERWENDUNG FÜR KRAFTFAHRZEUGE
STEERING LOCK DEVICE WITH INSERTABLE BOLT, WHICH IS INTENDED, FOR EXAMPLE, FOR MOTOR VEHICLES

(30) Priorité: 17.06.2004 FR 0406602
(43) Date de publication de la demande: 07.03.2007
(73) Titulaire: VALEO SECURITE HABITACLE S.A.S., 94042 Créteil Cédex (FR)
(72) Inventeur: LESUEUR, Guillaume, Valéo Sécurité Habitacle, F-94042 Créteil Cedex (FR); MALTAVERNE, Frédéric, Valéo Sécurité Habitacle, F-94042 Créteil Cedex (FR)
(86) Numéro de dépôt international: PCT/EP2005/052755
(87) Numéro de publication internationale: WO 2005/123469

(56) Documents cités:
- EP-A- 0 953 487
- EP-A- 1 069 010
- WO-A-02/085678
- FR-A- 2 820 385

## Description

La présente invention concerne un dispositif antivol qui est destiné à sécuriser un mécanisme de direction de véhicule.

L'invention trouve une application particulièrement avantageuse dans le domaine automobile.

De part la conception modulaire des véhicules automobiles actuels, il est aujourd'hui courant de pré-assembler différents organes entre eux très en amont du montage final du véhicule. C'est ainsi que la colonne de direction, équipée de son antivol, fait généralement partie d'un même sous-ensemble qui regroupe principalement la planche de bord et le bloc de chauffage/climatisation et qui est à même d'être monté d'un bloc à l'intérieur de la carrosserie.

Cette technique d'assemblage implique toutefois que le verrou de l'antivol de direction ne peut à priori pas être monté au même moment et/ou dans le même lieu que les verrous des différents ouvrants du véhicule, qui sont pourtant sensés fonctionner avec la même clé. Dans la pratique, cette particularité est de nature à compliquer l'assemblage du véhicule automobile sur les lignes de montage, en générant des risques non négligeables d'égarement de clés et/ou d'incompatibilité entre les différents verrous.

Pour remédier à ces difficultés, il est connu d'utiliser un antivol de direction de type à verrou insérable, c'est-à-dire un dispositif composé d'un corps d'antivol et d'un verrou qui constituent initialement deux sous-ensembles dissociés, mais qui sont à tout moment susceptibles d'être solidarisés ensemble. Bien que cette configuration modulaire soit particulière, il n'en demeure pas moins que le verrou reste classiquement chargé de commander la mise en oeuvre de moyens de verrouillage qui sont tout aussi communément, intégrés dans le corps d'antivol d'une part, et destinés à bloquer au moins un élément mobile de la direction d'autre part.

Un tel antivol de direction présente l'avantage de pouvoir être monté en deux temps, avec tout d'abord le corps d'antivol, puis le verrou. Dans le cadre de notre problématique, cette caractéristique permet en premier lieu de pouvoir procéder au montage du verrou d'antivol indépendamment de la réalisation du module de planche de bord, en l'occurrence ultérieurement à l'assemblage du corps de l'antivol sur la colonne de direction. Mais cette caractéristique autorise également de pouvoir procéder au montage du verrou d'antivol de manière sensiblement concomitante aux autres verrous du véhicule.

Les antivols de direction à verrou insérable, qui sont connus de l'état de la technique, offrent toutefois l'inconvénient majeur de présenter une faiblesse sécuritaire relativement importante au niveau du verrou, puisque rien n'est prévu pour pallier à un éventuel arrachement de ce dernier. Or cette partie du dispositif antivol apparaît d'autant plus vulnérable que le verrou constitue une pièce rapportée, et qu'à ce titre il ne peut en aucune manière être intégré et solidarisé aussi efficacement que si il avait été implanté en tant que composant interne d'un dispositif antivol monobloc.

Il en résulte que dans ce type de dispositif antivol, le verrou s'avère au final toujours relativement accessible et jamais optimalement retenu à l'intérieur du corps d'antivol. Le retrait du verrou, notamment par arrachement, ne constitue par conséquent pas une opération insurmontable. Or une fois cet acte accompli, il est alors possible d'accéder très facilement à l'intérieur du corps d'antivol, et par conséquent de rendre inopérants les moyens de verrouillage de la colonne de direction. EP-A-1 069 010 divulgue un dispositif antivol selon le préambule de la revendication 1.

Aussi, le problème technique. à résoudre par l'objet de la présente invention, est de proposer un dispositif antivol de direction à verrou insérable, notamment pour véhicule automobile, comportant un corps d'antivol qui est composé d'une première partie dans laquelle sont intégrés des moyens de verrouillage aptes à bloquer un élément mobile de la direction, ainsi que d'une seconde partie à l'intérieur de laquelle est destiné à être inséré et solidarisé un verrou apte à commander la mise en oeuvre des moyens de verrouillage, dispositif antivol qui permettrait d'éviter les problèmes de l'état de la technique en offrant notamment un niveau d'inviolabilité sensiblement amélioré, tout en conservant sa capacité à permettre un montage différé du corps d'antivol d'une part, et du verrou de commande d'autre part.

La solution au problème technique posé consiste, selon la présente invention comme définie par la revendication 1, en ce que le dispositif antivol comporte en outre des moyens de condamnation aptes à bloquer la mise en oeuvre des moyens de verrouillage en cas de retrait du verrou postérieurement à sa solidarisation à l'intérieur de la seconde partie du corps d'antivol.

L'invention telle qu'ainsi définie présente l'avantage de pouvoir disposer d'un antivol de direction dont le verrou peut être monté indépendamment du mécanisme de verrouillage proprement dit, mais aussi de bénéficier d'un niveau de sécurité s'avère considérablement accru en terme d'effraction.

La présente invention concerne également les caractéristiques qui ressortiront au cours de la description qui va suivre, et qui devront être considérées isolément ou selon toutes leurs combinaisons techniques possibles.

La description, donnée à titre d'exemple non limitatif, est destinée à mieux faire comprendre en quoi consiste l'invention et comment elle peut être réalisée. Cette description est par ailleurs donnée en référence aux dessins annexés dans lesquels:
- La figure 1 illustre en perspective un dispositif antivol de direction conforme à l'objet de la présente invention.
- La figure 2 constitue une vue en transparence de la face opposée du positif antivol de direction tel que représenté à la figure 1.
- La figure 3 est une vue similaire à la figure 2, mais qui ne fait apparaître qu'uniquement le corps d'antivol.
- La figure 4 montre en perspective et en détail le verrou du dispositif antivol de direction, verrou qui est déjà visible à la figure 2.
- La figure 5 constitue une vue en transparence faisant apparaître la disposition relative des moyens de condamnation et des moyens de verrouillage au sein du dispositif antivol de direction.
- La figure 6 est une vue en transparence qui montre en détail l'interaction entre les moyens de condamnation et les moyens de verrouillage du dispositif antivol de direction.
- La figure 7 illustre le couplage entre le verrou et les moyens de condamnation du dispositif antivol de direction.
- La figure 8 est une vue montrant en détail une portion de la partie stator du verrou, qui supporte un levier de blocage des moyens de verrouillage.
- La figure 9 représente en perspective l'élément de maintien amovible du dispositif antivol de direction.
- La figure 10 fait apparaître le positionnement du levier de blocage des moyens de verrouillage, à l'intérieur de l'élément de maintien amovible de la figure 9.
- La figure 11 illustre en perspective la partie stator du verrou.
- La figure 12 montre en perspective le couplage entre la partie stator du verrou et l'élément de maintien amovible.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

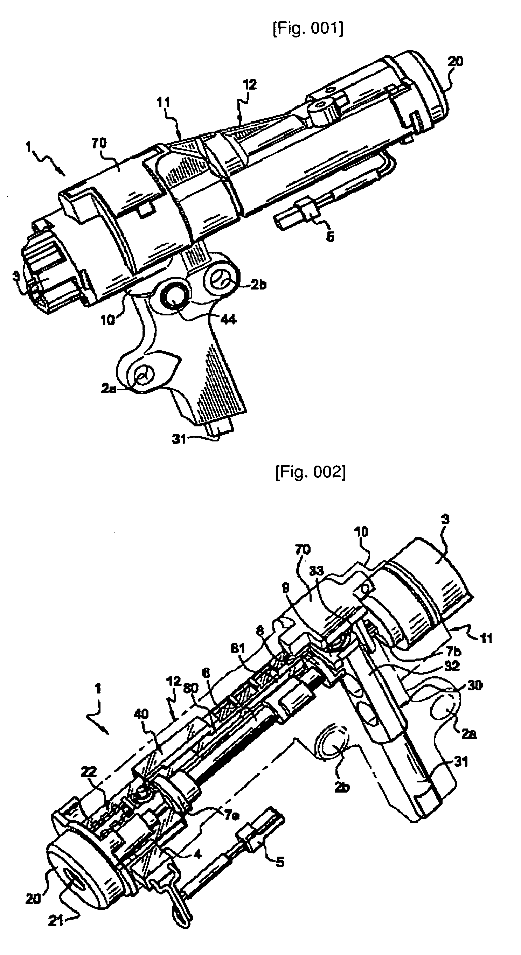

Les figures 1 et 2 illustrent un dispositif antivol à verrou insérable 1, qui est destiné à être monté dans un véhicule automobile pour en sécuriser la direction. Deux alésages traversants 2a, 2b sont d'ailleurs prévus pour recevoir des vis de fixation et ainsi permettre une solidarisation à proximité directe de la colonne de direction.

Le dispositif antivol 1 comporte un corps d'antivol 10 en métal qui est doté d'une première partie 11 dans laquelle sont intégrés des moyens de verrouillage 30 destinés à bloquer un élément mobile de la direction. Le corps d'antivol 10 est également pourvu d'une seconde partie 12 à l'intérieur de laquelle est inséré et solidarisé un verrou 20 qui est quant à lui chargé de commander la mise en oeuvre des moyens de verrouillage 30.

Conformément à l'objet de la présente invention, le dispositif antivol 1 dispose en outre de moyens de condamnation 40 qui sont à même de bloquer la mise en oeuvre des moyens de verrouillage 30 en cas de retrait du verrou 20, postérieurement à sa solidarisation à l'intérieur de la seconde partie 12 du corps d'antivol 10.

On observe par ailleurs que dans ce mode particulier de réalisation, donné uniquement à titre d'exemple, le dispositif antivol 1 est classiquement doté d'un interrupteur 3 chargé d'activer le démarrage ainsi que différentes fonctions électriques du véhicule automobile. On remarque également au niveau du verrou 20, la présence tout aussi habituelle d'un capteur de présence clé qui se compose essentiellement d'un palpeur 4 et d'un connecteur 5.

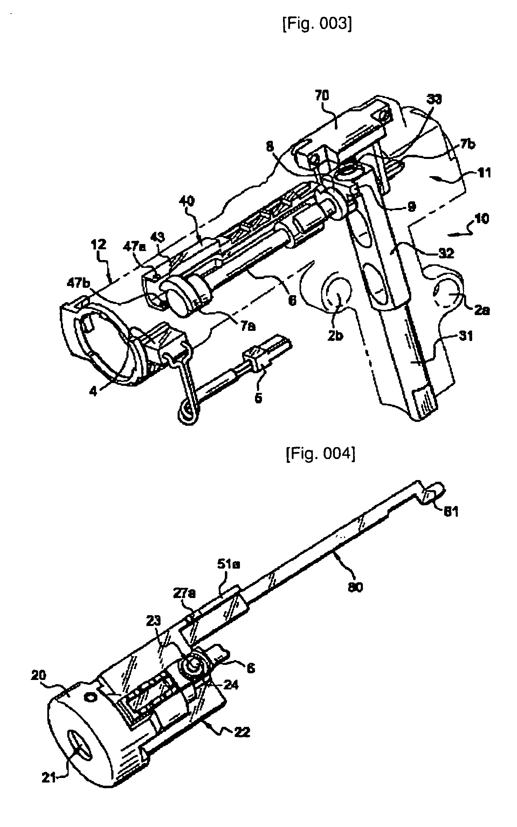

Ainsi qu'on peut le voir plus particulièrement sur les figures 2 et 3 de cet exemple de réalisation, les moyens de verrouillage 30 comprennent un pêne de blocage en acier 31 qui est solidaire d'un coulisseau en zamak 32. L'ensemble est monté mobile en translation à l'intérieur du corps d'antivol 10, mais également entraîné en déplacement vers le bas par l'intermédiaire de moyens de rappel élastique 33 se présentant ici sous la forme d'un ressort de compression.

La mise en oeuvre des moyens de verrouillage 30 est classiquement commandée par le verrou 20, via un vilebrequin 6 chargé par ailleurs d'actionner l'interrupteur 3.

Afin que le vilebrequin 6 puisse remplir sa fonction de moyen de transmission, l'une de ses extrémités 7a est conformée de manière à pouvoir s'emboîter et ainsi coopérer par entraînement avec la partie rotor 21 du verrou 20. Le vilebrequin 6 est également pourvu d'une came 8 qui est à même de coopérer avec un épaulement 9 ménagé sur le coulisseau 32. L'ensemble est agencé de manière à ce que la came 8 soit en mesure de relever le coulisseau 32 en le faisant translater à l'encontre de la poussée exercée par les moyens de rappel élastique 33.

Pour que le vilebrequin 6 puisse en outre assurer son autre fonction d'actionneur d'interrupteur, sa seconde extrémité 7b est conformée de façon à pouvoir s'emboîter avec une partie mobile sensiblement complémentaire de l'interrupteur 3.

La figure 4 met quant à elle plus particulièrement en lumière la structure du verrou insérable 20, et notamment son mécanisme de solidarisation 23. Dans cet exemple de réalisation, ce mécanisme de solidarisation 23 se résume à un plot 24 monté sur ressort, le tout étant implanté à la surface de la partie stator 22 du verrou 20. Cela sous entend bien évidemment qu'un logement, de forme sensiblement complémentaire au plot 24, est ménagé à l'intérieur de la seconde partie 12 du corps d'antivol 10.

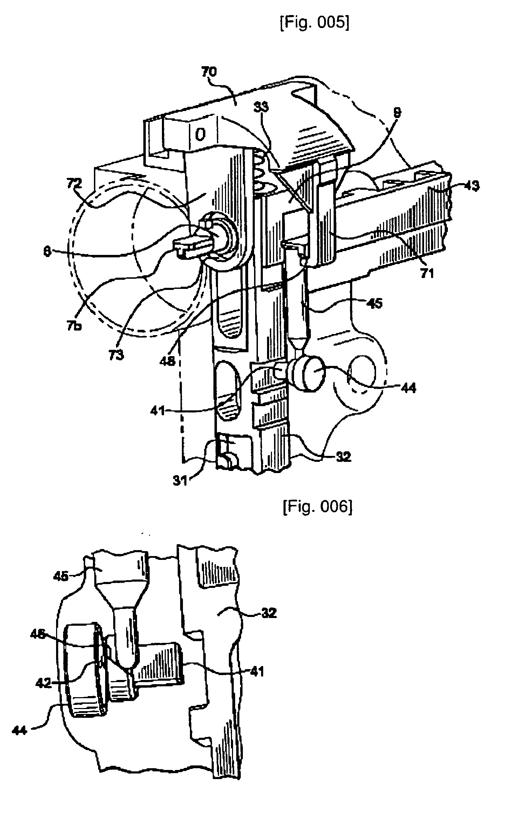

Conformément à un mode de réalisation actuellement préféré de l'invention, les moyens de condamnation 40 sont tout d'abord dotés d'un élément de blocage 41 qui est monté mobile en déplacement. Cette mobilité s'exerce entre une position passive dans laquelle l'élément de blocage 41 est disposé à distance d'un élément mobile des moyens de verrouillage 30 (figures 5 et 6), et une position active dans laquelle il coopère par contact bloquant avec ledit élément mobile, en l'occurrence le coulisseau 32.

Les moyens de condamnation 40 comprennent également des moyens de rappel élastique 42 qui sont en mesure d'entraîner en déplacement l'élément de blocage 41 vers sa position active. Concrètement, il s'agit ici d'un ressort de compression qui est intercalé entre l'élément de blocage 41 et un cache 44 qui est serti dans le corps d'antivol 10.

Les moyens de condamnation 40 sont en outre pourvus d'un élément de maintien amovible 43 qui est, d'une part, à même d'immobiliser l'élément de blocage 41 en position passive, et d'autre part, en mesure d'être couplé irréversiblement à la partie stator 22 du verrou 20 lors de la solidarisation dudit verrou 20 dans la seconde partie 12 du corps d'antivol 10.

Enfin, et toujours selon ce mode de réalisation actuellement préféré de l'invention, l'ensemble est agencé de manière à ce que le retrait de l'élément de maintien amovible 43 soit en mesure de libérer la mobilité de l'élément de blocage 41 de sa position passive à sa position active.

Conformément aux figures 5 et 6, on remarque que dans cet exemple particulier de réalisation, l'élément de maintien amovible 43 n'agit pas directement sur l'élément de blocage 41, mais par l'intermédiaire d'une tige 45 qui est montée mobile en translation suivant une direction sensiblement orthogonale au déplacement dudit élément de blocage 41. La mobilité de cette tige intermédiaire 45 s'exerce entre une position engagée et une position désengagée dans lesquelles elle se positionne respectivement au contact et à distance d'une rampe 46 ménagée sur l'élément de blocage 41.

L'ensemble est par ailleurs agencé de manière à ce qu'en position engagée, la tige intermédiaire 45 soit en outre bloquée en translation par l'élément de maintien amovible 43, dans une position telle que l'élément de blocage 41 est alors en position passive. En position désengagée par contre, le retrait de l'élément de maintien amovible 43 permet de libérer la mobilité de la tige intermédiaire 45, et conséquemment celle de l'élément de blocage 41. Comme ce dernier est soumis à la poussée des moyens de rappel élastique 42, il va pouvoir translater jusqu'à venir eu contact du coulisseau 32. La tige intermédiaire 45 est alors simplement repoussée vers le haut sous l'effet de la rampe 46.

Bien entendu, il est tout à fait possible de concevoir un système équivalent dans lequel l'élément de maintien amovible 43 serait en mesure d'interagir sans intermédiaire sur l'élément de blocage 41. En d'autres termes, l'immobilisation en position passive de l'élément de blocage 41 par l'élément de maintien amovible 43, peut être réalisée directement ou indirectement.

Il est à noter que l'on entend par couplage irréversible tout assemblage à caractère durable et définitif, c'est-à-dire qui ne peut être dissocié sans générer de dommages. Il peut ainsi s'agir par exemple d'un clippage, d'un collage, d'un emboîtement par élément escamotable, d'un emboîtement avec déformation élastique, etc. Dans le cas présent, seule la personne possédant la clé correspondante pour l'actionnement du verrou pourra démonter celui-ci de l'antivol sans générer de dommages sur le verrou et/ou sur l'antivol.

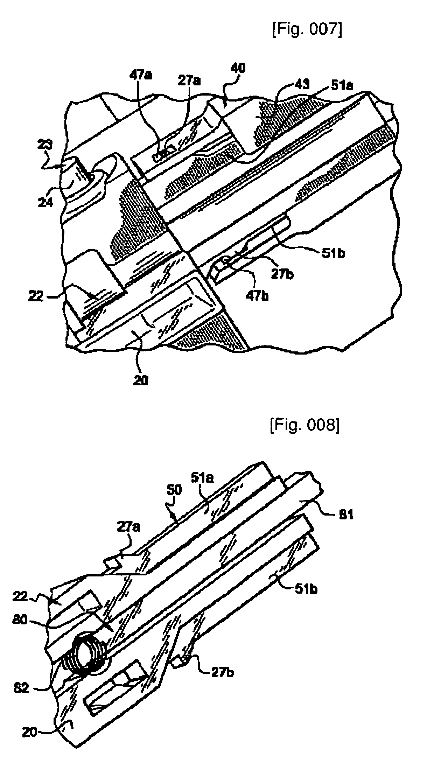

De préférence cependant, et conformément à ce qui est visible sur la figure 7, le couplage irréversible entre l'élément de maintien amovible 43 et la partie stator 22 du verrou 20 est réalisé par l'intermédiaire d'au moins un emboîtement de deux éléments de liaisons 27a, 27b, 47a, 47b dont au moins un est élastiquement déformable. Dans un tel cas de figure, les deux éléments de liaison 27a, 27b, 47a, 47b d'un même emboîtement sont avantageusement de formes sensiblement complémentaires, et respectivement solidaires de la partie stator 22 du verrou 20 d'une part, et de l'élément de maintien amovible 43 d'autre part.

Ainsi qu'on peut le voir plus précisément à la figure 8, les éléments de liaison 27a, 27b solidaires de la partie stator 22 du verrou 20 se présentent sous la forme de deux éléments saillants s'étendant dans des directions opposées. De leur côté, les éléments de liaison 47a, 47b portés par l'élément de maintien amovible 43 sont constitués par deux trous ménagés à travers des parois parallèles elles aussi opposées (figures 3 et 7).

Selon une particularité de l'invention, le dispositif antivol 1 est doté de moyens 50 qui sont en mesure de guider le couplage irréversible entre la partie stator 22 du verrou 20 et l'élément de maintien amovible 43.

De manière particulièrement avantageuse, les moyens de guidage 50 comprennent au moins une languette 51a, 51b à même de coopérer par glissement dans une rainure 52a, 52b, suivant une direction sensiblement parallèle à la direction d'emboîtement des éléments de liaisons 27a, 27b, 47a, 47b. Chaque languette 5 1 a, 51b et sa rainure correspondante 52a, 52b peuvent par ailleurs être ménagées respectivement et indifféremment sur la partie stator 22 du verrou 20 et sur l'élément de maintien amovible 43.

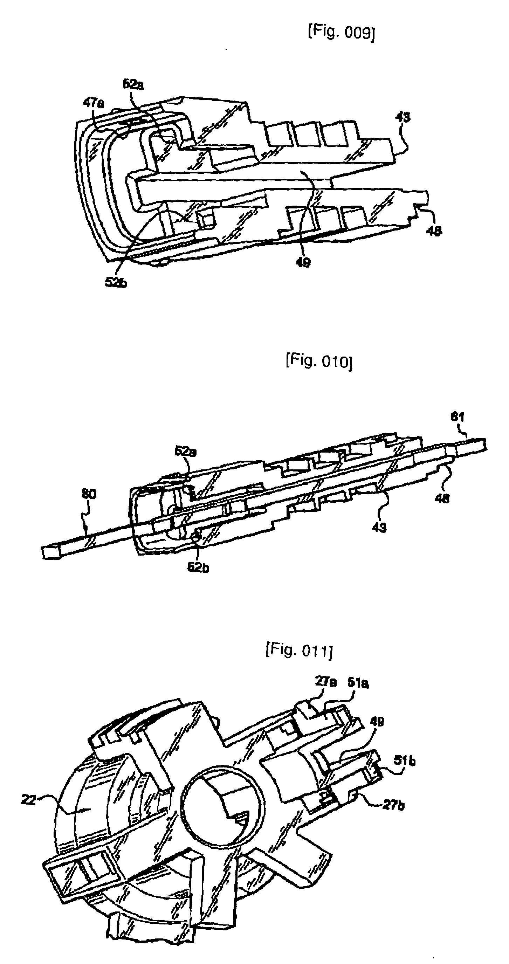

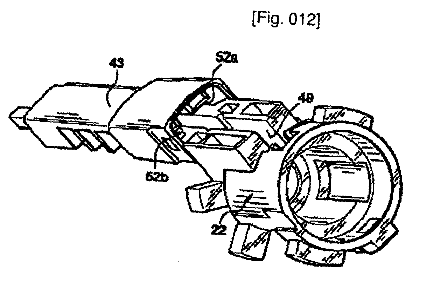

Conformément aux figures 7 à 12, la partie stator 22 du verrou 20 est concrètement pourvue de deux languettes 51 a, 51b qui s'étendant dans un même plan mais dans des directions opposées (figure 8), tandis que l'élément de maintien amovible 43 est doté de deux rainures 52a, 52b également coplanaires mais disposées en regard l'une de l'autre (figure 9).

Tout comme ses homologues à structures monoblocs, le dispositif antivol à verrou insérable 1 selon l'invention est concerné par les normes de sécurité passive relatives aux accidents. C'est logiquement pourquoi il est tout à fait envisageable de le doter lui aussi d'une zone fusible permettant au corps d'antivol 10 de se casser en deux en cas de choc avec un membre inférieur du conducteur. Le but est bien évidemment d'empêcher la partie 12 supportant le verrou 20, qui est par construction relativement rigide et saillante, de venir altérer sérieusement l'intégrité physique du conducteur. Or cette fragilité programmée du corps de l'antivol 10 s'avère à priori incompatible avec l'exigence d'inviolabilité du dispositif antivol 1 considéré dans son ensemble.

Ainsi donc, et selon une autre particularité de l'invention, la première partie 11 et la seconde partie 12 du corps d'antivol 10 sont délimitées par une zone fusible 60 qui est à même de se rompre si une force d'intensité supérieure à un seuil donné est appliquée au niveau de ladite seconde partie 12 du corps d'antivol 10. Dans de telles conditions, les moyens de condamnation 40 sont en outre avantageusement en mesure de bloquer la mise en oeuvre des moyens de verrouillage 30 en cas de rupture de la zone fusible 60. Il est à noter que la rupture peut être engendrée indifféremment par un choc accidentel ou par un impact lors d'une tentative d'effraction.

Comme l'élément de maintien amovible 43 est solidaire de la partie stator 22 du verrou 20, qui est elle-même solidaire de la seconde partie 12 du corps d'antivol 10, l'élément de maintien amovible 43 en question va rester solidaire de ladite seconde partie 12 du corps d'antivol 10 si la zone fusible 60 vient à se rompre. La cassure de cette portion saillante du dispositif d'antivol 1 va par conséquent entraîner une mise en oeuvre des moyens de condamnation 40 qui est identique à celle qui est générée en cas de simple retrait du verrou 20.

Conformément à une autre particularité de l'invention, visible aux figures 1 à 3 et 5, la première partie 11 du corps d'antivol 10 comporte un élément de fermeture 70 qui - est chargée d'obturer une ouverture destinée à la mise en place d'au moins une partie des moyens de verrouillage 30 à l'intérieur dudit corps d'antivol 10. Dans ce cas de figure, les moyens de condamnation 40 sont en outre avantageusement en mesure de bloquer la mise en oeuvre des moyens de verrouillage 30 en cas de retrait de l'élément de fermeture 70, voir même de simple tentative de retrait.

De manière particulièrement avantageuse, l'élément de fermeture 70 est doté d'une patte d'ancrage 71 à même de s'accrocher à une surface d'appui 48, formant butée, qui est ménagée sur l'élément de maintien amovible 43, en opposition par rapport audit élément de fermeture 70. L'élément de maintien amovible 43 est en outre de nature à se déformer élastiquement en direction de l'élément de fermeture 70. L'ensemble est agencé de manière à ce que la déformation élastique de l'élément de maintien amovible 43 soit en mesure de libérer la mobilité de l'élément de blocage 41 de sa position passive à sa position active.

La figure 5 montre également que l'élément de fermeture 70 est classiquement pourvu d'une patte de retenue 72 à travers laquelle est ménagé un alésage 73 destiné au passage du vilebrequin 6.

Selon une autre particularité de l'invention, visible au moins partiellement aux figures 2, 4, 8 et 10, le dispositif antivol de direction 1 est pourvu de moyens de blocage 80 qui sont à même de rendre inopérants les moyens de verrouillage 30 lorsque le verrou 20 est doté de sa clé.

Ces moyens de blocage 80 sont tout d'abord dotés d'un levier de blocage 81 qui est monté mobile en pivotement sur la partie stator 22 du verrou 20 (figure 8). Cette mobilité s'exerce entre une position active dans laquelle le levier de blocage 81 est à même d'immobiliser un élément mobile 32 des moyens de verrouillage 30, et une position passive dans laquelle il est disposé à distance de l'élément mobile 32 en question.

Les moyens de blocage 80 sont en outre pourvus de moyens de rappel élastique 82 qui sont en mesure d'entraîner en pivotement le levier de blocage 81 vers sa position passive. Il est à noter que cette caractéristique est ici associée au fait que l'insertion de clé dans le verrou 20 est au contraire apte à entraîner en pivotement le levier de blocage 81 vers sa position active.

Toujours selon cette même particularité de l'invention, l'élément de maintien amovible 43 dispose quant à lui avantageusement d'une rainure 49 qui est à même de guider le pivotement du levier de blocage 81 entre sa position passive et sa position active (figures 9 à 12).

Bien évidemment, l'invention concerne également tout véhicule automobile comportant au moins un dispositif antivol de direction 1 tel que précédemment défini.

## Revendications

1. Dispositif antivol de direction à verrou insérable (1) notamment pour véhicule automobile, comportant un corps d'antivol (10) qui est composé d'une première partie (11) dans laquelle sont intégrés des moyens de verrouillage (30) aptes à bloquer un élément mobile de la direction, ainsi que d'une seconde partie (12) à l'intérieur de laquelle est destiné à être inséré et solidarisé un verrou (20) apte à commander la mise en oeuvre des moyens de verrouillage (30), le dispositif antivol (1) comportant en outre des moyens de condamnation (40) aptes à bloquer la mise en oeuvre des moyens de verrouillage (30) en cas de retrait du verrou (20) postérieurement à sa solidarisation à l'intérieur de la seconde partie (12) du corps d'antivol (10), les moyens de condamnation (40) comportant:
- un élément de blocage (41) monté mobile en déplacement entre une position passive dans laquelle il est disposé à distance d'un élément mobile (32) des moyens de verrouillage (30), et une position active dans laquelle il coopère par contact bloquant avec ledit élément mobile (32),
- des moyens de rappel élastique (42) aptes à entraîner en déplacement l'élément de blocage (41) en position active,
- un élément de maintien (43) qui est apte à immobiliser l'élément de blocage (41) en position passive et dont le retrait est apte à libérer la mobilité de l'élément de blocage (41) de sa position passive à sa position active,
**caractérisé en ce que** l'élément de maintien est amovible (43) et est apte à être couplé à la partie stator (22) du verrou (20) lors de la solidarisation dudit verrou (20) dans la seconde partie (12) du corps d'antivol (10).

2. Dispositif antivol de direction (1) selon la revendication 1, **caractérisé en ce que** le couplage entre l'élément de maintien amovible (43) et la partie stator (22) du verrou (20) est réalisé par l'intermédiaire d'au moins un emboîtement de deux éléments de liaisons (27a, 27b, 47a, 47b) dont au moins un est élastiquement déformable, les deux éléments de liaison (27a, 27b, 47a, 47b) d'un même emboîtement étant de formes sensiblement complémentaires et respectivement solidaires de ladite partie stator (22) du verrou (20) d'une part, et dudit élément de maintien amovible (43) d'autre part.

3. Dispositif antivol de direction (1) selon l'une des revendications 1 ou 2, **caractérisé en ce qu'**il comporte des moyens (50) aptes à guider le couplage entre la partie stator (22) du verrou (20) et l'élément de maintien amovible (43).

4. Dispositif antivol de direction (1) selon la revendication 3, **caractérisé en ce que** les moyens de guidage (50) comportent au moins une languette (51a, 51b) apte à coopérer par glissement dans une rainure (52a, 52b) suivant une direction sensiblement parallèle à la direction de d'emboîtement des éléments de liaisons (27a, 27b, 47a, 47b), chaque languette (51a, 51b) et la rainure correspondante (52a, 52b) étant ménagées respectivement et indifféremment sur la partie stator (22) du verrou (20) et sur l'élément de maintien amovible (43).

5. Dispositif antivol de direction (1) selon l'une quelconque des revendications 1 à 4, **caractérisé en ce que** la première partie (11) et la seconde partie (12) du corps d'antivol (10) sont délimitées par une zone fusible (60) apte à se rompre si une force d'intensité supérieure à un seuil donné est appliquée au niveau de ladite seconde partie (12) du corps d'antivol (10), et **en ce que** les moyens de condamnation (40) sont en outre aptes à bloquer la mise en oeuvre des moyens de verrouillage (30) en cas de rupture de ladite zone fusible (60).

6. Dispositif antivol de direction (1) selon l'une quelconque des revendications 1 à 5, **caractérisé en ce que** la première partie (11) du corps d'antivol (10) comporte un élément de fermeture (70) apte à obturer une ouverture destinée à la mise en place d'au moins une partie des moyens de verrouillage (30) à l'intérieur dudit corps d'antivol (10), et **en ce que** les moyens de condamnation (40) sont en outre aptes à bloquer la mise en oeuvre des moyens de verrouillage (30) en cas de retrait dudit l'élément de fermeture (70).

7. Dispositif antivol de direction (1) selon la revendication 6, **caractérisé en ce que** l'élément de fermeture (70) comporte une patte d'ancrage (71) apte à s'accrocher à une surface d'appui (48), formant butée, qui est ménagée sur l'élément de maintien amovible (43) en opposition par rapport audit élément de fermeture (70), **en ce que** l'élément de maintien amovible (43) est par ailleurs apte à se déformer élastiquement en direction de l'élément de fermeture (70), et **en ce que** la déformation élastique dudit élément de maintien amovible (43) est apte à libérer la mobilité de l'élément de blocage (41) de sa position passive à sa position active.

8. Dispositif antivol de direction (1) selon l'une quelconque des revendications 1 à 7, **caractérisé en ce qu'**il comporte des moyens de blocage (80) aptes à rendre inopérants les moyens de verrouillage (30) lorsque le verrou (20) est doté de sa clé, les moyens de blocage (80) comportant d'une part un levier de blocage (81) monté mobile en pivotement sur la partie stator (22) du verrou (20) entre une position active dans laquelle il est apte à immobiliser un élément mobile (32) des moyens de verrouillage (30) et une position passive dans laquelle il est disposé à distance dudit élément mobile (32), et d'autre part des moyens de rappel élastique (82) aptes à entraîner en pivotement le levier de blocage (81) vers sa position passive, l'insertion de clé dans le verrou (20) étant au contraire apte à entraîner en pivotement le levier de blocage (81) vers sa position active, et **en ce que** l'élément de maintien amovible (43) comporte une rainure (49) apte à guider le pivotement du levier de blocage (81) entre sa position passive et sa position active.

9. Véhicule automobile, **caractérisé en ce qu'**il comporte au moins un dispositif antivol de direction (1) selon l'une quelconque des revendications précédentes.

## Claims

1. An antitheft steering lock device with an insertable bolt (1) particularly for a motor vehicle, comprising an antitheft lock body (10) that consists of a first portion (11) in which are incorporated locking means (30) capable of immobilizing a movable steering element, and a second portion (12) inside which is intended to be inserted and positively connected a bolt (20) capable of controlling the use of the locking means (30), the antitheft lock device (1) also comprises blocking means (40) capable of inhibiting the use of the locking means (30) if the bolt (20) is removed after it has been positively connected inside the second portion (12) of the antitheft lock body (10), the blocking means (40) comprising :
- an immobilization element (41) mounted so as to be movable between a passive position in which it is placed at a distance from a movable element (32) of the locking means (30), and an active position in which it interacts via immobilizing contact with said movable element (32),
- elastic return means (42) capable of moving the immobilization element (41) into an active position,
- a removable retention element (43) that is capable of immobilizing the immobilization element (41) into a passive position and that the removal is capable of releasing the mobility of the immobilization element (41) from its passive position to its active position,
**characterized in that** the removal retention element (43) is capable of being coupled to the stator portion (22) of the bolt (20) when said bolt (20) is positively connected in the second portion (12) of the antitheft lock body (10).

2. The antitheft steering lock device (1) as claimed in claim 1, **characterized in that** the coupling between the removable retention element (43) and the stator portion (22) of the bolt (20) is achieved by means of at least one interlocking of two connection elements (27a, 27b, 47a, 47b) whereof at least one is elastically deformable, the two connection elements (27a, 27b, 47a, 47b) of one and the same interlocking being of substantially complementary shapes and respectively positively connected to said stator portion (22) of the bolt (20) on the one hand, and to the removable retention element (43) on the other hand.

3. The antitheft steering lock device (1) as claimed in one of claims 1 or 2, **characterized in that** it comprises means (50) capable of guiding the coupling between the stator portion (22) of the bolt (20) and the removable retention element (43).

4. The antitheft steering lock device (1) as claimed in claim 3, **characterized in that** the guidance means (50) comprise at least one tongue (51 a, 51 b) capable of interacting by sliding in a groove (52a, 52b) in a direction substantially parallel to the direction of interlocking of the connection elements (27a, 27b, 47a, 47b), each tongue (51a, 51b) and the corresponding groove (52a, 52b) being arranged respectively and without distinction on the stator portion (22) of the bolt (20) and on the removable retention element (43).

5. The antitheft steering lock device (1) as claimed in any one of claims 1 to 4, **characterized in that** the first portion (11) and the second portion (12) of the antitheft lock body (10) are delimited by a fusible zone (60) capable of breaking if a force of an intensity above a given threshold is applied to said second portion (12) of the antitheft lock body (10), and **in that** the blocking means (40) are also capable of inhibiting the use of the locking means (30) if said fusible zone (60) is broken.

6. The antitheft steering lock device (1) as claimed in any one of claims 1 to 5, **characterized in that** the first portion (11) of the antitheft lock body (10) comprises a closure element (70) capable of closing off an opening designed for installing at least one portion of the locking means (30) inside said antitheft lock body (10), and **in that** the blocking means (40) are also capable of inhibiting the use of the locking means (30) if said closure element (70) is removed.

7. The antitheft steering lock device (1) as claimed in claim 6, **characterized in that** the closure element (70) comprises an anchoring lug (71) capable of being coupled to a bearing surface (48), forming a stop, that is arranged on the removable retention element (43) in opposition relative to said closure element (70), **in that** the removable retention element (43) is furthermore capable of deforming elastically in the direction of the closure element (70), and **in that** the elastic deformation of said removable retention element (43) is capable of releasing the mobility of the immobilization element (41) from its passive position to its active position.

8. The antitheft steering lock device (1) as claimed in any one of claims 1 to 7, **characterized in that** it comprises immobilization means (80) capable of rendering the locking means (30) inoperative when the bolt (20) is furnished with its key, the immobilization means (80) comprising, on the one hand, an immobilization lever (81) mounted so as to move by pivoting on the stator portion (22) of the bolt (20) between an active position in which it is capable of immobilizing a movable element (32) of the locking means (30) and a passive position in which it is placed at a distance from said movable element (32), and, on the other hand, elastic return means (82) capable of pivoting the immobilization lever (81) to its passive position, the insertion of the key into the bolt (20) being, on the other hand, capable of pivoting the immobilization lever (81) to its active position, and **in that** the removable retention element (43) comprises a groove (49) capable of guiding the pivoting of the immobilization lever (81) between its passive position and its active position.

9. A motor vehicle, **characterized in that** it comprises at least one antitheft steering lock device (1) as claimed in any one of the preceding claims.

## Patentansprüche

1. Lenkschloss mit einführbarem Sperrbolzen (1), insbesondere für Kraftfahrzeuge, mit einem Lenkschlosskörper (10) bestehend aus einem ersten Teil (11), in dem Verriegelungsmittel (30) zum Verriegeln eines beweglichen Teils der Lenkung untergebracht sind, sowie einem zweiten Teil (12), in den zur Steuerung der Betätigung der Verriegelungsmittel (30) ein Sperrbolzen (20) eingeführt und darin fest gehaltert werden kann, wobei das Lenkschloss (1) ferner Sicherungsmittel (40) aufweist, mit denen die Betätigung der Verriegelungsmittel (30) bei Herausziehen des Sperrbolzens (20) nach dessen Halterung im Innern des zweiten Teils (12) des Lenkschlosskörpers (10) verhindert werden kann, und die Sicherungsmittel (40) aufweisen:
- ein beweglich gelagertes Blockierelement (41), das zwischen einer unwirksamen Stellung, in der es von einem beweglichen Teil (32) der Verriegelungsmittel (30) beabstandet gelagert ist, und einer wirksamen Stellung, in der es mit dem beweglichen Teil (32) blockierend zusammenwirkt, verschiebbar ist,
- ein Federmittel (42) zum Verschieben des Blockierelementes (41) in die wirksame Stellung,
- ein Haltemittel (43), mit dem das Blockierelement (41) in der unwirksamen Stellung festgestellt werden kann und bei dessen Herausziehen das Überführen des Blockierelementes (41) von seiner unwirksamen Stellung in die wirksame Stellung freigegeben wird,
**dadurch gekennzeichnet, dass** das Haltemittel lösbar ist (43) und während der Sperrbolzen (20) im zweiten Teil (12) des Lenkschlosskörpers (10) fest gehaltert ist mit einem Statorteil (22) des Sperrbolzens (20) gekoppelt werden kann.

2. Lenkschloss (1) nach Anspruch 1, **dadurch gekennzeichnet, dass** die Kopplung zwischen dem lösbaren Haltemittel (43) und dem Statorteil (22) des Sperrbolzens (20) über mindestens eine Steckverbindung von zwei Verbindungsteilen (27a, 27b, 47a, 47b) erfolgt, von denen mindestens eines elastisch verformbar ist, wobei die beiden Verbindungsteile (27a, 27b, 47a, 47b) ein und derselben Steckverbindung im wesentlichen formkomplementär sind und jeweils mit dem Statorteil (22) des Sperrbolzens (20) einerseits und mit dem lösbaren Halteteil (43) andererseits fest verbunden sind.

3. Lenkschloss (1) nach einem der Ansprüche 1 oder 2, **dadurch gekennzeichnet, dass** es Mittel (50) zum Steuern der Kopplung zwischen dem Statorteil (22) des Sperrbolzens (20) und dem lösbaren Halteteil (43) umfasst.

4. Lenkschloss (1) nach Anspruch 3, **dadurch gekennzeichnet, dass** die Steuerungsmittel (50) mindestens eine Zunge (51 a, 51 b) aufweisen, die mit einer Nut (52a, 52b) im Wesentlichen parallel zur Steckrichtung der Verbindungsteile (27a, 27b, 47a, 47b) gleitend zusammenwirken kann, wobei jede Zunge (51a, 51b) und die entsprechende Nut (52a, 52b) jeweils beliebig am Statorteil (22) des Sperrbolzens (20) und am lösbaren Halteteil (43) angeordnet sind.

5. Lenkschloss (1) nach einem der Ansprüche 1 bis 4, **dadurch gekennzeichnet, dass** der erste Teil (11) und der zweite Teil (12) des Lenkschlosskörpers (10) durch einen Sollbruchbereich (60) begrenzt sind, der brechen kann, wenn eine Kraft auf den zweiten Teil (12) des Lenkschlosskörpers (10) ausgeübt wird, die einen vorbestimmten Grenzwert übersteigt, und dass die Verriegelungsmittel bei Brechen des Sollbruchbereichs ferner die Betätigung der Verriegelungsmittel (30) verhindern können.

6. Lenkschloss (1) nach einem der Ansprüche 1 bis 5, **dadurch gekennzeichnet, dass** der erste Teil (11) des Lenkschlosskörpers (10) ein Verschließteil (70) umfasst, mit dem eine Öffnung zum Einführen mindestens eines Teils der Verriegelungsmittel (30) ins Innere des Lenkschlosskörpers (10) verschlossen werden kann, und dass mit den Sicherungsmitteln (40) bei Herausziehen des Verschließteils (70) ferner die Betätigung der Verriegelungsmittel (30) verhindert werden kann.

7. Lenkschloss (1) nach Anspruch 6, **dadurch gekennzeichnet, dass** das Verschließteil einen Verankerungslappen (71) umfasst, der an einer einen Anschlag bildenden Stützfläche (48) angreifen kann und der am lösbaren Halteteil (43) gegenüber dem Verschließteil (70) angeordnet ist, und dass durch die elastische Verformung des lösbaren Halteteils (43) die Überführung des Blockierelementes (41) von seiner unwirksamen in seine wirksame Stellung freigegeben werden kann.

8. Lenkschloss (1) nach einem der Ansprüche 1 bis 7, **dadurch gekennzeichnet, dass** es Feststellmittel (80) umfasst, mit denen die Verriegelungsmittel (30) unwirksam gemacht werden können, wenn der Schlüssel im Sperrbolzen (20) steckt, wobei die Feststellmittel (80) einerseits einen auf dem Statorteil (22) des Sperrbolzens (20) zwischen einer wirksamen Stellung, in der er ein bewegliches Teil (32) der Verriegelungsmittel (30) feststellen kann, und einer unwirksamen Stellung, in der er von dem beweglichen Teil (32) beabstandet angeordert ist, schwenkbar gelagerten Feststellhebel (81) und andererseits Federmittel (82) umfassen, mit denen der Feststellhebel (81) in seine unwirksame Stellung überführt werden kann, während durch das Einführen des Schlüssel in den Sperrbolzen (20) der Feststellhebel (81) in seine wirksame Stellung überführt werden kann, und dass das lösbare Halteteil (43) eine Nut (49) umfasst, mit der das Verschwenken des Feststellhebels (81) zwischen seiner unwirksamen und seiner wirksamen Stellung gesteuert werden kann.

9. Kraftfahrzeug, **dadurch gekennzeichnet, dass** es mindestens ein Lenkschloss (1) nach einem der vorhergehenden Ansprüche umfasst.
